# EUROPEAN PATENT SPECIFICATION

(11) **EP 0 491 095 B1**
(45) Date of publication and mention of the grant of the patent: **28.02.1996**
(21) Application number: 90313780.0
(22) Date of filing: 17.12.1990
(51) Int. Cl.: B60R 16/02, H04B 10/10

(54) **Single wire, infrared randomly reflected, automotive multiplexing system**
Einleiter-Kraftfahrzeug-Multiplex-Anlage, die zufällig reflektierte Infrarote Wellen benutzt
Système de multiplexage pour automobile, à conducteur unique, utilisant des ondes infrarouges à réflexion aléatoire

(43) Date of publication of application: 24.06.1992
(73) Proprietor: UNITED TECHNOLOGIES AUTOMOTIVE, Inc., Dearborn Michigan 48126 (US)
(72) Inventor: Maue, Winston H., Farmington Hills, Michigan 48167 (US); Jack, Robert A., Redford, Michigan 48240 (US)
(74) Representative: Gilding, Martin John

(56) References cited:
- EP-A- 0 117 832
- EP-A- 0 194 915
- DE-A- 2 839 127
- DE-A- 3 147 550
- FR-A- 2 494 534
- FR-A- 2 499 344
- HITACHI REVIEW. vol. 35, no. 3, June 1986, TOKYO JP pages 131 - 134; HASEGAWA ET AL.: "MULTIPLEX SYSTEM FOR AUTOMOBILES"
- FUNKSCHAU. no. 23, November 1983, MUNCHEN DE pages 45 - 47; KNOLL: "ELEKTRONIK IM AUTO: VORREITER"
- IEEE SPECTRUM. vol. 23, no. 6, June 1986, NEW YORK US pages 53 - 59; JURGEN: "COMING FROM DETROIT:NETWORKS ON WHEELS"

## Description

### Field of Invention

The present invention relates to automotive or vehicular multiplex control systems, particularly for controlling various automotive or vehicular electrical function loads, such as for example, lights, window motors, door locks, seat motors, trunk lid, and the like, particularly from within the vehicle. More particularly, the present invention relates to such a system in which only a single hard wire for providing, for example, twelve (12v) volts of DC power to each of the loads is necessary, with the communications between the control module and the various loads being accomplished by diffused, randomly reflected optical means, such as for example, infrared or similarly suitable optical energy transmitted through the air within the interior of the vehicle, diffusely reflected in a random manner by the various interior surfaces of the vehicle. The various interior surfaces used to reflect the optical energy include, for example, the interior side of the windshield, headliner, instrument panel, rear package tray or shelf, carpeting, upholstery and door trim panels, etc.

### Background Art

Historically, control of automotive loads such as lights, window motors, seat motors and the like has been through the connection or disconnection of the power circuitry with a separate control/power circuit being required for each load.

In recent years, automotive multiplex systems have been developed, which extend a major power bus to the various loads, but which rely on a two to approximately five wire data network to convey serial, multiplexed control data to a local logic component at each of the loads for causing connection of the power to the load at that location. Note, for example, assignee's patent to Floyd (US-A-4,534,025 issued August 6, 1985), the disclosure of which is incorporated herein by reference, and the prior art cited therein.

This has eliminated the need for a number of power conductors to the various loads, although, as mentioned, it still does require a network of, for example, two to five small data wires. Moreover, such data wires are very susceptible to problems caused by electromagnetic interference (EMI), and open circuits and short circuits caused by sharp edges.

The present invention is intended to reduce the need for data wires in a multiplexed system, along with their concomitant susceptibility to EMI and short or open circuits.

As a broad proposition the use of an infrared communication system in association with automobiles generally is known, as shown for example by the patents to Route et al (US-A-4,143,368 issued March 6, 1979) and to Biancardi (US-A-4,227,588 issued October 14, 1980). However, both of these patents are directed to external communications, in which an external transmitter, typically hand-held, is used to control various automotive functions. Such systems typically require direct "line-of-sight" from the user, located externally to the vehicle, to a sensor located or positioned on the exterior surface of the vehicle.

The patent to Wada et al (US-A-4,598,237 issued July 1, 1986) discloses a "power window control apparatus" in which a removable, infrared transmitter is used to control the opening and closing of automotive windows in a retro-fit type of situation. Typically, the control transmitter is left in a fixedly mounted bracket to control the front windows and then removed to control the rear windows, the fixed bracket having a switch located within it to sense when the hand-sized transmitter is positioned within it and when it has been removed. However, again, the signal is transmitted in a direct, line-of-sight manner.

The patent to Cox (US-A-3,924,120 issued December 2, 1975) is directed to the non-analogous art of a theater remote control system utilizing an infrared emitter for controlling, for example, a lighting system in the theater. The infrared communications system utilizes a single wire power source system to power various loads having respective infrared detector/receiver units tuned to respond to particular carrier frequencies. The patent notes that what is required between the transmitter and receiver is a continuous optical circuit, for instance, furnished by open space, mirrors, lenses, fiber optic bundles, or the like. Within the context of this patent, the reference to the word "mirrors" indicates a reliance upon the controlled, directly in-line reflection rather than a random, diffuse reflection of the optical signal, as occurs in the present invention.

EP-A-194915 discloses a vehicle multiplexing system in accordance with the classifying portion of claim 1.

The present invention is defined in the appended claims and utilizes a randomly reflected optical energy system in the interior of a car or other vehicle for transmitting or communicating electronically intelligible information between a central control or master module and remote or slave modules for the vehicular electrical functions, such as, for example, infrared transmitters and receivers for sensing and controlling various electrical load functions present in the vehicle. Paired infrared receivers and "answer-back" transmitters could be located, for example, in the doors, instrument panel, console, rear package tray, headliner, etc., to be controlled by a central or master control with its primary transmitter and secondary receiver.

The interior surfaces of the vehicle, including, for example, the windshield, the side and rear windows, seats, headliner, interior trim panels, rear package tray or shelf, etc., are used to randomly and diffusely reflect the infrared signals between the primary or master transmitter(s) and the slave receivers at the various electrical load functions.

With such a system, only one common wire is required for each module providing, for example, twelve (12v) volt DC power to it, with the battery and each load being grounded to the vehicle chassis to complete the circuit. Thus, the present invention eliminates large wire bundles, which have been becoming too large to be routed throughout the vehicle. For example, current multiplex automotive systems require typically two to five wires for communications and power, while the system of the present invention, for example, reduces the required wire count to only one wire, namely the power wire.

By reducing the number of wires going to each load element, the present invention, not only simplifies manufacturing processes but also, in eliminating the large wiring bundles, reduces electromagnetic interference, which could otherwise occur in the presence of extensive wiring. Additionally, the present invention eliminates the need for a communication bus necessary to implement option addition, as required in prior art multiplexing systems.

Thus, the present invention conveys the data between the central control or master module and the various remote or slave modules optically, utilizing for example, infrared radiation. Additionally, it does this without the use of "hard" fiber optic lines but instead transmits the infrared or similarly suitable optical energy "through the air" within the vehicle from a transmitter to one or more receivers. Additionally, to accommodate for intermediate blockage or absorption, the system of the present invention relies on a scattering technique, by which transmitted energy is randomly and diffusely reflected from various, naturally occurring surfaces in the vehicle to the various receivers and does not rely on direct, line-of-sight transmission or controlled reflection using particularly positioned reflective surface(s) or mirror(s).

Typically, the signal from any one primary or control transmitter is received at every receiver, and there are a number of transmitter/receiver modules located spaced throughout the vehicle, with the transmitters at the receiver modules being "answer-back" transmitters. Also, the communications system utilized in the present invention preferably includes a unique vehicle code to protect against infrared energy being received from one vehicle controlling or misinforming another vehicle.

As described in greater detail below, the preferred embodiment of the present invention includes a one-wire, multiplex system implemented by utilizing a central computer to control the system communications which occur in a time-division, serial fashion, with the vehicle chassis serving as the return or ground path for the electrical circuit. The central computer interrogates all system inputs via a paired infrared receiver, one at a time, noting any changes that occur in their states as transmitted from the remote modules. It then controls the system outputs by transmitting the appropriate commands using the primary or control infrared transmitter. Preferably each electronic module will have a paired infrared transmitter and receiver, each with a unique address, to form, for example, a bi-directional, optical communications link, although such is not necessary to the invention.

For example, the system can employ a serial multiplex transmission format that includes transmitting half-duplex, serial data bi-directionally. Each serial data transmission between the central module and a remote module contains, for example, a sync code used to alert the devices of a transmission start, a unique vehicle code (such as for example the vehicle identification number-VIN), the central console's MUX command, the central console's cyclic redundancy code (for error checking), the remote module's address, the remote module's MUX response, and the remote module's cyclic redundancy code.

The present invention allows many options to be added easily, possibly at the dealer level. A group of options can be added by installing a remote electronics module and connecting it to an output harness. The remote module should contain all of the input switches required and be installed, for example, into the existing trim panel.

Infrared remote systems can be implemented with just the addition of a hand-held transmitter, which would act like a remote module with its own unique address. Thus, many functions could be controlled from outside the vehicle with the remote transmitter, including, for example, theft alarm, illuminated entry, memory seat position, trunk unlock, door lock and unlock, window(s) up and down, lights "on" and "off," and even remote starting, if so desired.

The foregoing and other features and advantages of the present invention will become more apparent from the following description and drawings.

### Brief Description of the Drawings

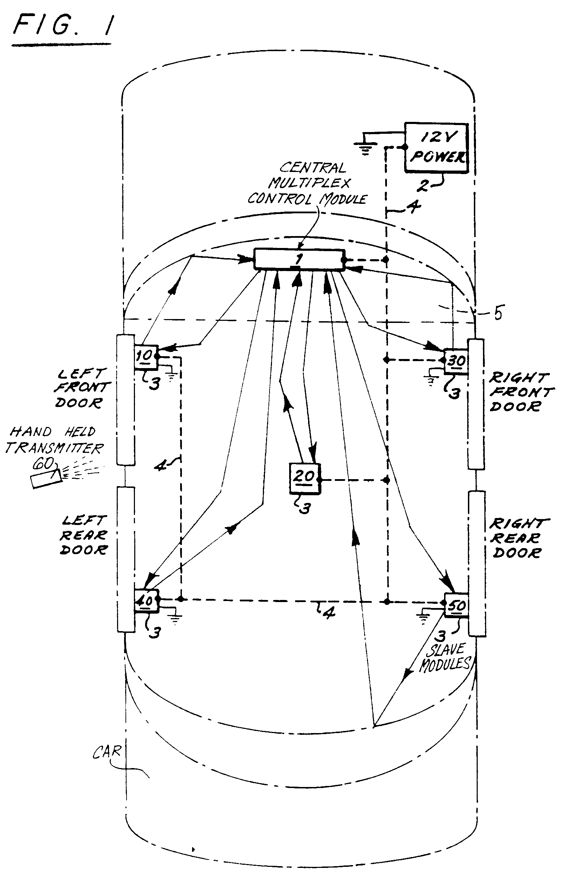

**Figure 1** is a schematic, simplified view generally illustrating the transmission of the control and system information optically between the central or master module of the vehicle and the various remote modules for the exemplary automotive loads present in the vehicle, it being noted that the large, straight, directional arrows of the figure do not represent the actual paths of the received and transmitted optical rays, which instead or diffused in their travel with typically multiple reflections before reaching their targets, but rather only the relative directions of information flow to and from the central infrared communications module.

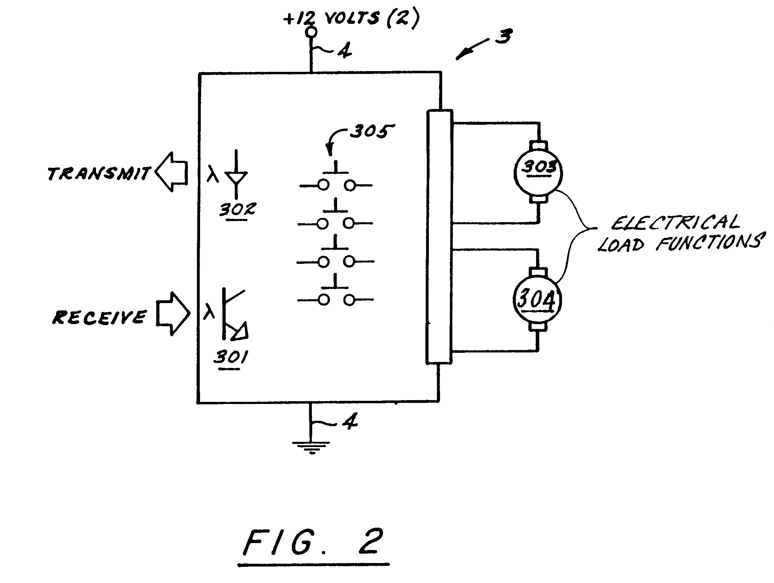

**Figure 2** is a simplified, schematic view of an exemplary remote electronic module used in the exemplary, preferred embodiment of the present invention.

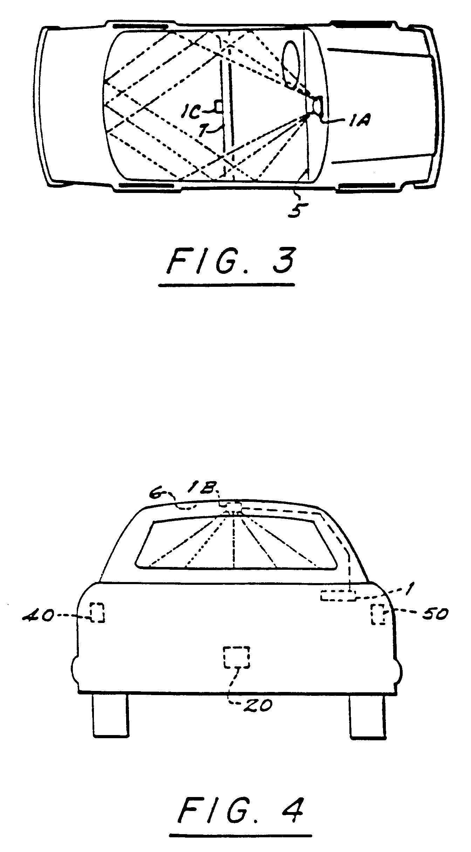

**Figures 3**, **4** & **5** are generalized top, rear and side views, respectively, of an automotive vehicle showing various exemplary placements of the master transmitter/receiver pair of the central module and exemplary ones of the randomly reflective optical rays emanating from the central transmitter.

### Best Mode for Carrying Out the Invention

As can be seen in **Figure 1**, a central or master multiplex control module **1** powered by, for example, a twelve volt (12v) DC battery power source **2** and grounded to the vehicle chassis communicates with a series of remote or slave modules **3** spaced throughout the interior of an automotive vehicle. The controls for the master module **1** are preferably located in the vehicle close at hand to the driver, in, for example, the instrument panel or dashboard or console **5**.

An exemplary five remote modules **3** are provided, namely a left front door remote module **10**, a console remote module **20**, a right front door remote module **30**, a left rear door remote module **40**, and a right rear door remote module **50**. The remote door modules **10**, **30**, **40** & **50** can be used to control for example the motors or actuators for the vehicle's power windows and door locks, respectively, while the console remote module **20** can be used for example to control a multiple number of electrical function loads, such as for example the seat positioning and adjusting motors, the vehicle's lights, including the interior light(s) and the dashboard or panel light(s), etc. Additional exemplary electrical function loads are the side view mirrors, the trunk lid, sound system controls, environmental controls, etc.

Each remote module **3**, as can be seen in the schematic of **Figure 2**, is electronic and contains both an optical receiver **301** and an optical energy transmitter **302** paired together, the optical energy used to communicate between unpaired transmitters and receivers, that is, a transmitter and a receiver which is not part of the same module, preferably being infrared or based on some other suitable electromagnetic radiation waves. As can be seen both in **Figures 1 & 2**, only a single electrical line **4** goes to each of the remote modules **3**, namely a twelve volt power line **4** from the DC power source or battery **2**, with several of them connected together in series, if so desired, and with all of them grounded to the chassis to complete the electrical circuit. This wire **4** is the only hard wire connection necessary from the power source, none being needed for control, and even this one could be eliminated in module(s) with independent electrical loads having their own self-contained, preferably rechargeable battery power source.

As further shown in **Figure 2**, the remote electronic module **3** can control not only one but a multiple number of function loads, for example two, namely, electrical load functions **303** & **304**, which for the door remote modules can be, for further example, the power window motor and the power door lock actuator. A series of switches **305** are optically or electronically controlled based on the type of system used and the information received by the optical (infrared) receiver **301**. These switches **305** in turn control the directly associated or attached electrical function loads **303** & **304**, or they can be used to pass on the signals to other associated loads not directly attached to the module **3** by, for example, causing the signals to be re-transmitted in the form of "passed on" infrared signals to another module. In the latter role, the "remote" module **3** is serving as, in essence, a central module, in similar fashion to that of the central module **1**. Thus, the "remote" modules **3** can also be considered "central" or "control" modules.

The electrical circuitry and component details for the central control module **1** and the remote modules **3** and the electronic component details for, for example, the components **301-305** are well known to those of ordinary skill, and, for the sake of simplicity and brevity, they are not repeated here.

Optical energy in the form of, for example, infrared electromagnetic radiation is transmitted out from each of the transmitters of the remote and the central modules and ultimately is received by all of the receivers of the remote and the central modules, typically after a number of random reflections of the received ray(s) off of various interior parts of the vehicle. Thus, the path of travel of the infrared radiation waves is not direct in a line-of-sight or controlled reflection manner, but rather goes through a series of random reflections as they impinge on the various interior surfaces found in the vehicle, including for example the interior side of the windshield, side and rear windows, seats, headliner, instrument panel, carpeting, upholstery, door trim panel, etc. Direct, in line-of-sight impingement or controlled reflection is not necessary or expected in the preferred embodiment and would not typically occur.

With respect to the interior side of the windshield, the reflective characteristics of a windshield having a defogging coating of, for example, a solution containing, for example, three quarters of an ounce (3/4 oz.) silver, may be particularly effective in producing diffused reflections of the infrared signals. In such an instance, particularly the central transmitter and possibly also the remote transmitters, to the extent feasible, could be primarily directed toward it.

Thus, the rays are scattered and are diffused in their travels from their original transmitter to ultimately each of the receivers, at least with respect to the central master transmitter to all of the remote slave receivers, and all of the remote slave transmitters to at least the central master receiver.

Exemplary, preferred locations of the central transmitter/sensor or receiver are illustrated in **Figures 1-5**.

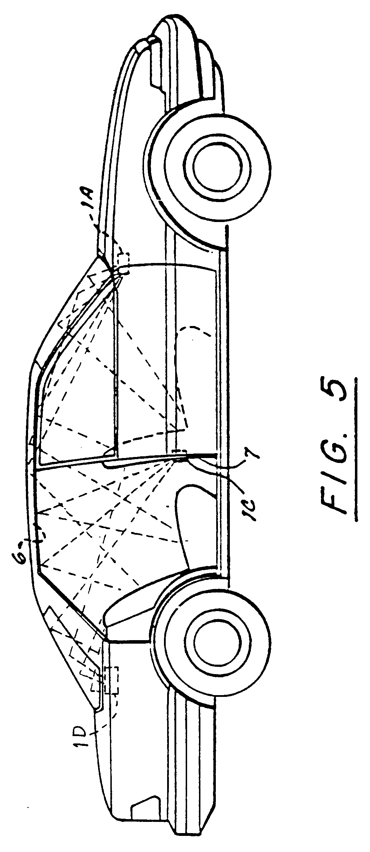

As can be seen in **Figures 3** & **5**, the central transmitter/sensor **1A** can be located on the top of the dashboard or instrument panel **5**, preferably directed at least in part against the interior side of the windshield, as well as forwardly up against the headliner **6**. Such directionality produces a highly spread out, optical ray field (note exemplary dashed lines), which gives a high rate of assurance that each transmission from the central transmitter **1A** will be received by each of the sensors or receivers **301** associated with each remote module **3**, usually each receiving a number of rays, each of which has been bounced or reflected off of a number of different interior surfaces in a randomly reflected, diffuse manner.

Such multiple signal paths are desirable to assure receipt of the transmitted signal in spite of a varying number of, or the movement of, occupants or of "baggage" which might be moved about or randomly placed, blocking one or more signal paths in the vehicle. Indeed, with the desired diffused approach of the present invention, the presence of such "obstacles" will perhaps further reflect the transmitted signals and further enhance the diffused nature of the transmitted optical signal, as it randomly travels in random fashion over multiple paths to the receiver(s).

In the alternate embodiment of **Figure 4**, the central transmitter/sensor **1B** associated with the central master control **1** is located in the center of the headliner **6** of the roof. The embodiment of **Figures 3** & **5** also can include, as illustrated, a supplemental transmitter/sensor or receiver **1C** for the remote modules located in the rear compartment of the vehicle in the area, preferably, of the central console which extends between the two front seats in many automotive vehicles. The transmitter/sensor **1C** is preferably located behind the backside **7** of the front seats in the center near the floor.

An additional, advantageous location for the central transmitter/receiver or a supplemental central transmitter/receiver is in the back package tray, deck or shelf below the rear window with the transmitter directed up toward the interior side of the rear window, as exemplified by the transmitter/receiver **1D** of **Figure 1**. The diffused nature of the optical ray field produced by the transmitter of the module **1D** and the collection of rays to be received by the receiver of the module **1D** are enhanced by the typical compound curvature of the interior surface of the rear window, as is also the case for the interior surface of the front windshield.

In all of these examples for the central transmitter/sensor **1A**, **1B**, **1C** & **1D**, the infrared ray pattern or field again is very spread out and transmitted to the various remote sensors **301** with random, diffused reflections.

The central module **1** includes a computer which controls the system communications, which communications occur preferably in a time division, serial fashion. The central computer interrogates all system inputs via the infrared receivers **301**, one at a time, noting any changes that occur in their states, as transmitted from the remote modules **3** from their transmitters **302**.

The central computer then controls the system outputs by transmitting the appropriate commands using its infrared transmitter. Each electronic remote module **3** has a unique address to form a bi-directional optical communication link in the system.

Preferably, the system employs a serial, multiplex transmission format that includes transmitting half-duplex, serial data bi-directionally. Each serial data transmission between the central module **1** and a remote module **3** preferably contains in electronically intelligible form - a sync code used to alert the modules of the transmission start, a unique vehicle code (such as for example the vehicle's identification number - VIN), the central unit's MUX or multiplexing command, the central unit's error checking code (e.g. a cyclic redundancy code - CRC), the remote module's unique address, the remote module's MUX response, and the remote module's error checking code (e.g. CRC).

It should be understood that the approach of the system of the present invention allows many options to be easily added to a vehicle, for example at the vehicle dealer's level. A group of options can be added, for example, by installing a remote electronics module and connecting it to a power output harness with a ground to the chassis. The remote module for a door should contain all of the input switches required and be installed into or behind, for example, the existing trim panel.

An infrared remote system can be implemented, if desired, with the addition of, for example, a hand-held, preferably pocket-sized transmitter, which acts like a remote module with its own unique address. Thus, many vehicle functions can be controlled from outside the vehicle with such a remote transmitter. Functions, such as for example, theft alarm, illuminated entry, memory seat position, trunk unlock, door lock and unlock, window(s) up and down, lights "on" and "off," and even remote engine starting can be included, if desired, within the functions controlled by the remote, exterior unit. This again merely involves the adoption of appropriate circuitry and encoding, in an appropriate manner known to those of ordinary skill in the art.

Utilizing transmitters and receivers which can communicate from randomly reflected, scattered signals requires either relatively more powerful transmitters and/or relatively more sensitive receivers than ones using direct, line-of-sight or controlled reflection or closed optical circuits for the transmitted and received signals. To in part obviate this requirement, some complementary channeling of the signals can be used, if desired, by, for example, appropriately positioning the central control module and/or supplying limited controlled reflection of the signals using, for example, fiber optic channels.

Thus, for example, pick-up and transmitting fiber optic elements having ends that terminate at the front and back of the front row of seats with their other ends extending to the transmitter and receiver of the central control module **1** could be used with, if desired, the central module located, for example, under the front seat structure. However, still randomly reflected signals are utilized in the transmission to at least some of the remote receivers or to the central transmitter from at least some of the remote transmitters, only the efficiency of the received signal strength being enhanced.

Some exemplary, "off-the-shelf" randomly reflective infrared transmission and sensor systems, modified parts of which could be used in the present invention, are found in the Hewlett-Packard calculator Model 28C and its associated printer Model 82240A, which intercommunicate with randomly reflected infrared signals, as well as the "TYRON"(TM) remote control power booster by Orion Alpha Corp. of Santa Clara, CA. The latter is used in essence to amplify the standard, direct line-of-sight video cassette recorder (VCR) and TV infrared controls, so that they are able to work more in a randomly reflective manner.

In the latter "TYRON" "off-the-shelf" example, the standard hand-held infrared control unit is placed in the "amplifying" unit, with the two in combination controlling the VCR or TV with somewhat randomly transmitted signals. The "TYRON" unit uses a solid state multi-stage amplifier design to optimize maximum power output with low power consumption driving multiple infrared light-emitting diodes (LEDs) for maximum signal strength. Additionally, a curved translucent window is used to increase signal dispersion.

Another "off-the-shelf" item of interest is the infrared remote control sub-system provided by the Eastman Kodak Co. as the "KODAK EKTAGRAPHIC"(TM) IR remote control for controlling slide projectors. The infrared receiver "sees" a full three hundred and sixty (360°) degrees, and the signal can be bounced off a projection screen or a light-colored wall to the receiver.

## Claims

1. A vehicular multiplexing system for controlling various ones of vehicular electrical function loads, such as lights, window motors, seat motors, door locks, and the like, comprising:
at least one optical energy, control, master transmitter (1A;1B;1C;1D) and a multiple number of optical energy, remote, slave receivers capable of communicating with said transmitter(s), said receivers (301) being located and spaced around in various, spaced parts of the interior of the vehicle, there being at least one electrical function load associated with each receiver and controlled by the multiplexing system, at least some of the receivers being located out of direct, in-line-of-sight with the transmitter with which it communicates; a central control (1) module located in the vehicle having at least said one transmitter associated therewith; and a series of remote modules (10,20,30,40,50), at least one associated with each of said receivers associated with each of the function loads; said multiplexing system characterised by optical energy means for having the information between said transmitters and said receivers being transmitted by optical energy travelling in a random, scattered diffused manner randomly reflected off various interior surfaces of the interior of the vehicle a multiple number of times as it travels between said receivers (301) and the transmitter(s) (1A;1B;1C;1D) with which each communicates and by which electronically intelligible information is transmitted, said electronically intelligible information transmission including at least the following:
a synchronization code;
a unique vehicle code;
command/sensor information;
error checking code; and
addressing code uniquely identifying at least one of said receivers.

2. The vehicular multiplexing system of Claim 1, wherein each of said transmitter(s) (1A;1B;1C;1D) includes transmission means for transmitting electronically intelligible information optically bi-directionally in the form of half-duplex, serial data, the information included in said information transmission being bi-directionally transmitted in the form of half-duplex, serial data.

3. The vehicular multiplexing system of Claim 2, wherein the information included in said electronically intelligible information transmission further includes at least the following:
command information from said central module (1), and response information from the receiver(s) uniquely addressed by said addressing code.

4. The vehicular multiplexing system of Claim 3, wherein said unique vehicle code is based on the vehicle's identification number (VIN).

5. The vehicular multiplexing system of Claim 4, wherein said error checking code includes a cyclic redundancy code (CRC).

6. The vehicular multiplexing system of Claim 1, wherein there is further included only one electrical wire (4) which is an operative part of the multiplexing system going to each of said function loads being controlled by the multiplexing system.

7. The vehicular multiplexing system of Claim 6, wherein said one electrical wire (4) is a power wire supplying DC power to its respective electrical function load.

8. The vehicular multiplexing system of Claim 1, wherein there is further included:
a hand-holdable, pocket size, exterior remote module, said exterior remote module including optical energy transmitter means for electronically controlling a number of electrical load functions of the vehicle from outside of the vehicle.

9. The vehicular multiplexing system of Claim 1, wherein said vehicle includes an instrument panel with an upper surface and a windshield, and wherein:
said central transmitter (1A) is located at the upper surface of the instrument panel directed upwardly toward the interior surface of the vehicle's windshield, with said optical energy being reflected off of said windshield in a diffused manner.

10. The vehicular multiplexing system of Claim 1, wherein said vehicle includes a rear shelf and a rear window located right above said rear shelf, and wherein:
said central transmitter (10) is located at the upper surface of said rear shelf directed upwardly toward the interior surface of the vehicle's rear window, with said optical energy being reflected off of said rear window in a diffused manner.

11. The vehicular multiplexing system of Claim 1, wherein said vehicle includes two, spaced front seats and a center console located between said two front seats, said console having a rear end, and wherein:
said central transmitter (1C) is located toward the rear end of said center console behind said front seats.

12. The vehicular multiplexing system of Claim 11, wherein:
said central transmitter (1B) is directed upwardly toward the headliner of the vehicle, with said optical energy being reflected off of said headliner in a diffused manner.

## Patentansprüche

1. Ein Fahrzeug-Multiplexsystem, um verschiedene von elektrischen Funktionslasten, wie zum Beispiel Lichter, Fenstermotoren, Sitzmotoren, Türschlösser und dergleichen, zu regeln, mit:
mindestens einem Regelungs-Hauptsender (1A; 1B; 1C; 1D) für optische Energie und einer vielfachen Anzahl von entfernten bzw. Fern-Tochterempfängern für optische Energie, die mit dem (den) Sender(n) in Verbindung stehen können, wobei sich die Empfänger (301) an verschiedenen beabstandeten Teilen des Inneren des Fahrzeugs befinden und verteilt sind, wobei dort mindestens eine elektrische Funktionslast mit jedem Empfänger verbunden ist und durch das Multiplexsystem geregelt wird; wobei sich mindestens einer der Empfänger außerhalb einer direkten Sichtlinie mit dem Sender befindet, mit dem er in Verbindung steht: einem zentralen Regelungsmodul (1), der sich in dem Fahrzeug befindet, mit mindestens dem einen damit verbundenen Sender: und einer Reihe entfernter bzw. Fernmodule (10, 20, 30, 40, 50), wovon mindestens einer mit jedem der Empfänger verbunden ist, die mit jeder der Funktionslasten verbunden sind; wobei das Multiplexsystem gekennzeichnet ist durch ein Mittel für optische Energie. damit die Information zwischen den Sendern und den Empfängern übertragen wird, indem optische Energie auf eine zufällige, gestreute, diffuse Weise, zufällig von verschiedenen Innenoberflächen in dem Inneren des Fahrzeugs mehrfach reflektiert, fortschreitet bzw. wandert, während sie zwischen den Empfängern (301) und dem (den) Sender(n) (1A; 1B; 1C; 1D) wandert, mit dem jeder in Verbindung steht und durch das elektronisch verständliche Information übertragen wird, wobei die Übertragung elektronisch verständlicher Information mindestens die folgende einschließt:
einen Synchronisiercode;
einen eindeutigen Fahrzeugcode;
Befehl/Sensorinformation;
Fehlerüberprüfungscode; und
Adressiercode, der mindestens einen der Empfänger eindeutig identifiziert.

2. Das Fahrzeug-Multiplexsystem nach Anspruch 1, worin jeder (von den) Sender(n) (1A; 1B; 1C; 1D) Übertragungsmittel einschließt, um elektronisch verständliche Information optisch bidirektional in der Form von seriellen Halbduplexdaten zu übertragen, wobei die in der Informationsübertragung enthaltene Information in der Form von seriellen Halbduplexdaten bidirektional übertragen wird.

3. Das Fahrzeug-Multiplexsystem nach Anspruch 2, worin die in der Übertragung elektronisch verständlicher Information enthaltene Information ferner mindestens die folgende enthält:
Befehlsinformation von dem zentralen Modul (1) und Antwortinformation von dem (den) Empfänger(n), die durch den Adressiercode eindeutig adressiert sind.

4. Das Fahrzeug-Multiplexsystem nach Anspruch 3, worin der eindeutige Fahrzeugcode auf der Identifikationsnummer der Fahrzeugs (VIN) basiert.

5. Das Fahrzeug-Multiplexsystem nach Anspruch 4, worin der Fehlerüberprüfungscode einen zyklischen Redundanzcode (CRC) einschließt.

6. Das Fahrzeug-Multiplexsystem nach Anspruch 1, worin ferner nur ein elektrischer Leiter (4) eingeschlossen ist, der ein funktionsfähiger Teil des Multiplexsystems ist, welcher zu jeder der Funktionslasten, die durch das Multiplexsystem geregelt werden, verläuft.

7. Das Fahrzeug-Multiplexsystem nach Anspruch 6, worin der eine elektrische Leiter (4) ein Stromleiter ist, der Gleichstromleistung zu dessen jeweiliger elektrischer Funktionslast zuführt.

8. Das Fahrzeug-Multiplexsystem nach Anspruch 1, worin ferner eingeschlossen ist: ein äußeres entferntes bzw. Fernmodul in Taschengröße, das in der Hand gehalten werden kann, wobei das äußere Fernmodul ein Übertragungsmittel für optische Energie einschließt, um eine Anzahl elektrischer Lastfunktionen des Fahrzeugs von außerhalb des Fahrzeugs zu regeln.

9. Das Fahrzeug-Multiplexsystem nach Anspruch 1, worin das Fahrzeug eine Instrumententafel mit einer oberen Oberfläche und eine Windschutzscheibe einschließt, und worin:
sich der zentrale Sender (1A) bei der oberen Oberfläche der Instrumententafel befindet, aufwärts auf die Innenoberfläche der Windschutzscheibe des Fahrzeugs zu gerichtet, wobei die optische Energie von der Windschutzscheibe auf eine diffuse Weise reflektiert wird.

10. Das Fahrzeug-Multiplexsystem nach Anspruch 1, worin das Fahrzeug ein hinteres Fach und ein Rückfenster, das sich direkt über dem hinteren Fach befindet, einschließt, und worin:
sich der zentrale Sender (1D) bei der oberen Oberfläche des hinteren Fachs befindet, aufwärts auf die Innenoberfläche des Rückfensters des Fahrzeugs zu gerichtet, wobei die optische Energie von den Rückfenster auf eine diffuse Weise reflektiert wird.

11. Das Fahrzeug-Multiplexsystem nach Anspruch 1, worin das Fahrzeug zwei beabstandete Vordersitze und eine Mittelkonsole, die sich zwischen den beiden Vordersitzen befindet, einschließt, wobei die Konsole ein hinteres Ende aufweist, und worin:
sich der zentrale Sender (1C) zu den hinteren Ende der Mittelkonsole hin hinter den Vordersitzen befindet.

12. Das Fahrzeug-Multiplexsystem nach Anspruch 11, worin:
der zentrale Sender (1B) aufwärts auf die Kopfleiste des Fahrzeugs zu gerichtet ist, wobei die optische Energie von der Kopfleiste auf eine diffuse Weise reflektiert wird.

## Revendications

1. Système de multiplexage de véhicule automobile pour commander différentes charges parmi des charges de fonctions électriques de véhicule automobile, telles que des éclairages, des moteurs de vitre, des moteurs de siège, des verrous de portière et analogues, comprenant :
au moins un transmetteur-maître de commande à énergie optique (1A; 1B; 1C; 1D) et une pluralité de récepteurs asservis à énergie optique, à distance, capable de communiquer avec ledit ou lesdits transmetteurs, lesdits récepteurs (301) étant situés et espacés autour de différentes parties espacées de l'intérieur du véhicule, au moins une charge de fonction électrique étant associée à chaque récepteur et commandée par le système de multiplexage, au moins certains des récepteurs étant situés hors de portée de vue directe du transmetteur avec lequel ils communiquent ; un module de commande (1) central situé dans le véhicule, comportant au moins ledit transmetteur lui étant associé; et une série de modules à distance (10, 20, 30, 40, 50), au moins l'un d'entre eux étant associé à chacun desdits récepteurs associé à chacune des fonctions de charge; ledit système de multiplexage étant caractérisé par un moyen d'énergie optique pour permettre la transmission d'une information entre lesdits transmetteurs et lesdits récepteurs par une énergie optique se déplaçant de manière diffusée et répandue aléatoire, réfléchie de manière aléatoire par différentes surfaces intérieures de l'intérieur du véhicule, une pluralité de fois lorsqu'elle se déplace entre lesdits récepteurs (301) et le ou les transmetteurs (1A; 1B; 1C; 1D), avec lesquels chacun d'entre eux communique et par lesquels une information intelligible électroniquement est transmise, ladite transmission d'information intelligible électroniquement comprenant au moins :
un code de synchronisation;
un code de véhicule unique;
une information commande/capteur;
un code de vérification d'erreurs; et
un code d'adresse identifiant de façon unique au moins l'un desdits récepteurs.

2. Système de multiplexage de véhicule automobile selon la revendication 1, dans lequel chacun desdits transmetteurs (1A; 1B; 1C; 1D) comprend un moyen de transmission pour transmettre une information intelligible électroniquement de manière optiquement bidirectionnelle, sous la forme de données en série de semi-duplex, l'information incluse dans ladite transmission d'information étant transmise de manière bidirectionnelle sous la forme de données en série semi-duplex.

3. Système de multiplexage de véhicule automobile selon la revendication 2, dans lequel l'information incluse dans ladite transmission d'information intelligible électroniquement comprend en outre au moins :
une information de commande provenant dudit module central (1) et une information de réponse provenant du ou des récepteurs, adressée uniquement par ledit code d'adresse.

4. Système de multiplexage de véhicule automobile selon la revendication 3, dans lequel ledit code de véhicule unique est basé sur le numéro d'identification de véhicule (VIN).

5. Système de multiplexage de véhicule automobile selon la revendication 4, dans lequel ledit code de vérification d'erreur comprend un code à redondance cyclique (CRC).

6. Système de multiplexage de véhicule automobile selon la revendication 1, dans lequel est en outre inclus un seul fil électrique (4) qui constitue une partie fonctionnelle du système de multiplexage allant vers chacune desdites charges de fonction commandée par le système de multiplexage;

7. Système de multiplexage de véhicule automobile selon la revendication 6, dans lequel ledit fil électrique (4) est un fil d'alimentation fournissant une puissance de courant continue à sa charge de fonction électrique respective.

8. Système de multiplexage de véhicule automobile selon la revendication 1, dans lequel est en outre inclus :
un module déporté de poche, extérieur, portatif à la main, ledit module déporté extérieur comprenant un moyen transmetteur d'énergie optique pour commander électroniquement un certain nombre de fonctions de charges électriques du véhicule depuis l'extérieur du véhicule.

9. Système de multiplexage de véhicule automobile selon la revendication 1, dans lequel ledit véhicule comprend un tableau de bord ayant une surface supérieure et un parebrise, et dans lequel :
ledit transmetteur central (1A) est situé sur la surface supérieure du tableau de bord, orienté vers le haut en direction de la surface intérieure du pare-brise du véhicule, ladite énergie optique étant réfléchie par ledit pare-brise de manière diffuse.

10. Système de multiplexage de véhicule automobile selon la revendication 1, dans lequel ledit véhicule comprend un plateau arrière et une vitre arrière située juste au-dessus dudit plateau arrière, et dans lequel :
ledit transmetteur central (1B) est situé sur la surface supérieure dudit plateau arrière, orienté vers le haut en direction de la surface intérieure de la vitre arrière de véhicule, ladite énergie optique étant réfléchie par ladite vitre arrière de manière diffuse.

11. Système de multiplexage de véhicule automobile selon la revendication 1, dans lequel ledit véhicule comprend deux sièges avant espacés et une console centrale située entre lesdits deux sièges avant, ladite console ayant une extrémité arrière, et dans lequel :
ledit transmetteur central (1C) est situé vers l'extrémité arrière de ladite console centrale derrière lesdits sièges avant.

12. Système de multiplexage de véhicule automobile selon la revendication 11, dans lequel :
ledit transmetteur central (1B) est orienté vers le haut en direction de l'habillage de toit du véhicule, ladite énergie optique étant réfléchie par ledit habillage de toit de manière diffuse.
